(19) Europäisches Patentamt
European Patent Office
Office européen des brevets

(11) Veröffentlichungsnummer : **0 037 953**
**B1**

(12) **EUROPÄISCHE PATENTSCHRIFT**

(45) Veröffentlichungstag der Patentschrift : **28.12.83**

(21) Anmeldenummer : **81102407.4**

(22) Anmeldetag : **31.03.81**

(51) Int. Cl.³ : **B 01 J 31/06**, H 01 M 10/52, C 01 B 5/00

(54) **Hydrophober Katalysator für Rekombinatoren.**

(30) Priorität : **10.04.80 DE 3013753**

(43) Veröffentlichungstag der Anmeldung : **21.10.81 Patentblatt 81/42**

(45) Bekanntmachung des Hinweises auf die Patenterteilung : **28.12.83 Patentblatt 83/52**

(84) Benannte Vertragsstaaten : **AT FR GB SE**

(56) Entgegenhaltungen :
**DE-A- 1 943 183**
**DE-A- 2 800 660**
**FR-A- 1 495 925**
**FR-A- 2 378 061**
**US-A- 3 235 473**
**US-A- 3 248 267**
**US-A- 3 258 360**
**US-A- 3 305 403**

(73) Patentinhaber : **VARTA Batterie Aktiengesellschaft**
**Am Leineufer 51**
**D-3000 Hannover 21 (DE)**

(72) Erfinder : **Jung, Margarete**
**Parkstrasse 15/17**
**D-6233 Kelkheim (DE)**
Erfinder : **Winsel, August, Prof. Dr.**
**Fasanenstrasse 8a**
**D-6233 Kelkheim (DE)**

(74) Vertreter : **Kaiser, Dieter Ralf, Dipl.-Ing.**
**Gundelhardtstrasse 72**
**D-6233 Kelkheim/Ts. (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 037 953 B1

# Hydrophober Katalysator für Rekombinatoren

Die Erfindung betrifft eine Katalysatormatte zur Rekombination von Wasserstoff und Sauerstoff, insbesondere zur Rekombination der beim Betrieb elektrischer Akkumulatoren entstehenden Gase, bestehend aus einer Mischung von Polytetrafluoräthylen und Kieselgur als Katalysatorträgermaterial, die mit einem aktiven katalytischen Material versehen ist.

Der wartungsarme Betrieb moderner Akkumulatoren wird im wesentlichen durch effiziente Rekombinatoren für die sowohl beim Laden als auch während Standzeiten und bei der Entladung anfallenden Wasserstoff- und Sauerstoffgase ermöglicht. Die Rekombinatoren sind gewöhnlich auf dem Deckel des Batteriegehäuses über einer Belüftungsöffnung angeordnet oder zweckmäßig direkt in den Verschlußstopfen integriert.

Für die einwandfreie Funktion des Rekombinators ist nicht allein die Auswahl eines geeigneten aktiven katalytischen Materials — hier hat sich im allgemeinen Palladium bewährt — wichtig, sondern es muß außerdem eine für lange Zeit anhaltende Aktivität dieses Materials gewährleistet sein. Aus diesem Grunde erhält auch die Qualität des Katalysatorträgers entscheidende Bedeutung. Dieser sollte dem Gas eine möglichst große Oberfläche darbieten bzw. hochporös sein, andererseits einer Benetzung durch kondensierende Flüssigkeit widerstehen. Eine weitere selbstverständliche Forderung an den Katalysatorträger ist Unanfälligkeit gegen chemische Korrosion.

Übliche Katalysatorträger werden beispielsweise in Form einer Matte aus palladiumimprägnierten Kohle- oder Asbestgeweben hergestellt. Die Wirksamkeit solcher Matten läßt jedoch nach einiger Zeit wegen ungenügender Wasserabstoßung nach. Erfahrungen mit Katalysatorträgern auf Aktivkohlebasis haben zudem gezeigt, daß sie nach kurzer Berührungszeit mit Knallgas aufglimmten, wobei es dann zu einer Explosion kam.

Bei Katalysatorträgern mineralischer Herkunft besteht eine solche Gefahr zwar nicht, dafür ist die unerwünschte Benetzbarkeit groß. Wie aus der GB-Patentschrift 1 277 625 zu entnehmen, hat man daher versucht, ein netzfähiges Trägermaterial, wie beispielsweise Diatomeenerde, durch Verschneiden mit Polytetrafluoräthylen-Pulver, im folgenden PTFE genannt, zu hydrophobieren. Die Dauerhaftigkeit einer solchen Hydrophobierung muß jedoch infrage gestellt werden, wenn der Katalysator noch vor dem Einsatz einer Aktivierung nach herkömmlicher Weise unterzogen wird. Bei dieser findet eine Reduktion des eingetränkten Palladiumsalzes zu Palladium mittels Formaldehyd in einem flüssigen, meist stark alkalischen Medium statt. Durch Alkali wird silikatisches Material angeätzt und dadurch der Benetzbarkeit Vorschub geleistet, zumal der poröse Träger nach der Reduktionsbehandlung gründlich ausgewaschen werden muß.

Bei der Herstellung katalysatorhaltiger Elektroden für Brennstoffzellen gemäß US-Patentschrift 3.248.267 wird ein aus $SiO_2$, PTFE und Palladiumschwarz bestehendes Elektrodenmaterial nach dem Verpressen einer intensiven Auslaugung ausgesetzt, die eine teilweise Entfernung des $SiO_2$ bezweckt, um so eine Porenstruktur zu schaffen ; diese Maßnahme ist aufwendig und wenig materialschonend.

Es erwies sich weiterhin als schwierig, bei der Herstellung von Katalysatormatten auf der Grundlage eines Gemisches aus PTFE und Kieselgur mit Hilfe vorhandener Pressen eine zufriedenstellende Stückzahl auszubringen, die gleichzeitig den Anforderungen der Preßlinge hinsichtlich Porosität und Festigkeit genügte.

Der Erfindung liegt daher die Aufgabe zugrunde, eine Katalysatormatte der vorgenannten Zusammensetzung anzugeben, die aufgrund ihres Herstellungsverfahrens die erwähnten Nachteile nicht besitzt.

Die Aufgabe wird erfindungsgemäß durch die im kennzeichnenden Teil des Anspruchs 1 genannten Merkmale gelöst.

Bei der Katalysatormatte gemäß der Erfindung handelt es sich um eine flexible Folie aus einem verdichteten PTFE-Kieselgur-Gemisch, wobei das Mengenverhältnis der beiden Komponenten zwischen 40 : 60 Gew.% und 60 : 40 Gew.% schwanken kann. Durch den Anteil der preisgünstigen Kieselgur am eigentlichen Katalysatorträger zeichnet sich die Matte durch hohe Wirtschafflichkeit aus. Der Gehalt an aktivem katalytischen Material liegt bei 0,1 bis 5 Gew.%, vorzugsweise bei 0,5 bis 2 Gew.% Pd.

Erfindungsgemäß kann der Katalysatormatte zusätzlich eine mit Kupferoxid (CuO) imprägnierte Kohlematte aufgewalzt sein, welche der Adsorption des in den Blei-Akkumulatorgasen enthaltenen Antimonwasserstoffs ($SbH_3$) dient und so den Katalysator vor der Vergiftung schützt. Die Kohlematte wirkt gleichzeitig als Diffusionssperre bei Überlastung des Rekombinatorstopfens durch ein zu hohes Gasangebot, bei dem die Rekombinationsrate bis weit unter 80 % absinken kann.

Ein besonderer Vorteil der erfindungsgemäß hergestellten Katalysatormatte liegt darin, daß die wesentlichen Katalysatoreigenschaften, nämlich hohe Aktivität des eigentlichen Katalysatormaterials und Hydrophobizität des Trägers, nachdem sie durch entsprechende Arbeitsgänge fertig ausgebildet worden sind, nicht durch störende Nachbehandlungen am Produkt ihre Wirksamkeit zum Teil wieder einbüßen, was bei vielen bekannten Katalysatoren als Folge z. B. eines Nachsinterns oder Auslaugung des Trägermaterials der Fall ist. Die erfindungsgemäße Katalysatormatte zeichnet sich daher auch durch langanhaltende Funktionstüchtigkeit aus. Ihre Herstellung vollzieht sich im einzelnen wie folgt : 40 bis 60 Gew.% PTFE-Pulver, dessen mittlere

Korngröße in weiten Grenzen des 10 μ- und 100 μ-Bereichs schwanken kann, werden mit 60 bis 40 Gew.% Kieselgur einem intensiven Mischungsprozess unterworfen, bei welchem die Teile durch Einwirkung starker mechanischer Schlagkräfte zerkleinert werden. Anschließend wird das Gemisch einer Vibration unterzogen und danach gewalzt. Durch die Vibrationsbehandlung wird der Neigung des Gemisches zum Verklumpen entgegengewirkt und damit eine gute Walzbarkeit ermöglicht. Sie kann beispielsweise auf einem Schwingtisch vorgenommen werden. Es ist auch möglich, das Gemisch über eine Vibrierrinne in den Walzenstuhl einlaufen zu lassen.

Das erhaltene Walzband wird nunmehr durch eine 1- bis 10 %ige Palladiumchloridlösung gezogen, wobei die Verweilzeit mindestens 1 Minute beträgt, und anschließend mit Heißluft getrocknet.

Der nächste erfindungswesentliche Schritt besteht in einer Nachhydrophobierung der Walzband-Oberfläche mit Hilfe einer ca. 30 %igen PTFE-Suspension durch Tauchen oder Einsprühen. Die Einwirkungszeit soll dabei weniger als 10 Sekunden betragen. Die kurze Zeit verhindert, daß die PTFE-Suspension zu stark in das Innere des Katalysatorträgers eindringt und auf der Oberfläche eine zu dicke Schicht gebildet wird, bei der die Gefahr besteht, daß sie beim Trocknen aufreißt und somit unwirksam wird.

Die richtige PTFE-Dosierung kann aber auch durch Einstellen einer entsprechenden Dispersionskonzentration erfolgen.

Das leicht angetrocknete und nicht mehr klebende Walzband kann nun durch Heißluft oder mittels IR-Heizung getrocknet werden. Danach soll das Walzband eine glatte, geschlossene, milchig-weiße PTFE-Schicht besitzen.

Letzter Schritt bei der Herstellung der Katalysatormatte ist die Aktivierung, die erfindungsgemäß durch einen sinterähnlichen Prozess erfolgt. Bei diesem wird gemäß

$$PdCl_2 \xrightarrow[430\,°C]{N_2} Pd + Cl_2$$

aus dem Palladiumchlorid metallisches Palladium in feinst verteilter Form gebildet. Die feine Verteilung des Palladiumchlorids auf der großen Oberfläche der Kieselgur stellt möglicherweise eine günstige Nebenbedingung für diesen Zerfallsprozess dar.

Die Aktivierung geschieht in einem Rohrofen bei einer Temperatur zwischen 370 und 460 °C, wobei die Verweilzeit je nach Temperatureinstellung 5 bis 30 Minuten betragen kann. Durch die Zersetzung des $PdCl_2$ wird die die Hydrophobierung bewirkende oberflächliche PTFE-Schicht aufgerissen.

Eine reduzierende Ofenatmosphäre ist für die Aktivierung der Katalysatormatte bzw. des Walzbandes nicht erforderlich. Die weiter oben angegebene Zerfallsreaktion verläuft auch in Luft, vorzugsweise jedoch unter strömendem Stickstoff. Der Stickstoffstrom muß so eingestellt sein, daß die entstehenden gasförmigen Zerfallsprodukte wie $Cl_2$, $C_2F_4$ oder Zersetzungsprodukte von Netzmitteln, die bei der Hydrophobierung aus der PTFE-Dispersion eingeschleppt wurden, abgeführt werden können.

Das fertig gesinterte und aktivierte Walzband kann nun, falls gewünscht, mit einer bandförmigen Kohlematte zusammengewalzt oder sofort in einzelne Katalysatormatten beliebigen Formats aufgeschnitten werden.

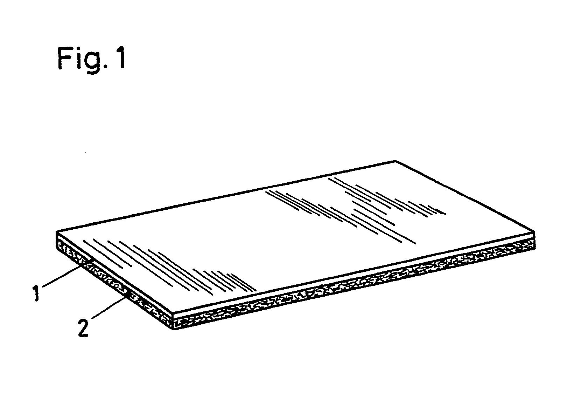

Figur 1 zeigt eine erfindungsgemäße Kombination zwischen einer Katalysatormatte 1 und einer mit CuO imprägnierten Kohlematte 2. Die Kohlematte kann beispielsweise ein Kohlefilz sein, der mit dem Zusammenwalzen verdichtet ist.

Die erfindungsgemäß hergestellte Katalysatormatte besitzt eine gute mechanische Festigkeit und behält neben guter Katalysatorwirkung ihre Hydrophobizität lange Zeit bei. Ihre Oberfläche sollte schwarzglänzend und möglichst keine sichtbaren Risse zeigen. Die erfindungsgemäße Katalysatormatte ist außer in Rekombinatoren für Akkumulatoren vielseitig verwendbar, nämlich in allen Anlagen, in denen Wasserstoff parasitär entsteht, beispielsweise in Brennstoffzellenanlagen zur Verbrennung von mit den Inertgasen ausgeblasenem Wasserstoff, in Batterieräumen von beispielsweise U-Booten oder EDV-Anlagen. Sie kann auch bei der Beseitigung von Radiolysegasen in Kernkraftwerken oder zur Wärmeerzeugung aus Wasserstoff und Sauerstoff und Luft verwendet werden.

Schließlich kann aus Hydrierungs- und Reduktionsprozessen anfallender Wasserstoff mit Hilfe der Katalysatormatte oxidiert werden, wobei man einer etwaigen Explosionsgefahr infolge Gasansammlungen entgegenwirkt. Die Reaktionswärme kann bei den nämlichen Prozessen zur Vorheizung dienen.

## Ansprüche

1. Katalysatormatte zur Rekombination von Wasserstoff und Sauerstoff, insbesondere der beim Betrieb elektrischer Akkumulatoren entstehenden Gase, hergestellt durch Tränken eines Trägermaterials aus Polytetrafluoräthylen und Kieselgur mit einem katalytisch aktiven Material, dadurch gekennzeichnet, daß eine Polytetrafluoräthylen-Kieselgur-Mischung gewalzt wird, daß das Walzprodukt mit einer Palladiumchlorid-Lösung getränkt wird und nach Zwischentrocknung in eine wäßrige Polytetrafluoräthylen-Dispersion getaucht wird, und daß nach erneutem Zwischentrocknen die Matte einer Sinterung in einer indifferenten oder reduzierenden Ofenatmosphäre unterworfen wird.

2. Katalysatormatte nach Anspruch 1, dadurch gekennzeichnet, daß das Mischungsverhältnis Polytetrafluoräthylen : Kieselgur zwischen 40 : 60 Gew.% und 60 : 40 Gew.% beträgt.

3. Katalysatormatte nach den Ansprüchen 1 und 2, dadurch gekennzeichnet, daß er 0,1 bis

5 Gew.%, vorzugsweise 0,5 bis 2 Gew.% Pd enthält.

4. Katalysatormatte nach den Ansprüchen 1 bis 3, dadurch gekennzeichnet, daß er auf eine Kohlematte aufgewalzt ist.

5. Katalysatormatte nach Anspruch 4, dadurch gekennzeichnet, daß die Kohlematte mit Kupferoxid imprägniert ist.

6. Katalysatormatte nach einem der Ansprüche 1 bis 5, dadurch gekennzeichnet, daß die Mischung zur Erzielung einer gleichmäßigen Verteilung unter Vibration auf die Walze aufgebracht wird.

7. Katalysatormatte nach einem der Ansprüche 1 bis 6, dadurch gekennzeichnet, daß das Walzprodukt mindestens 1 Minute mit einer 0,1-5 %igen $PdCl_2$-Lösung getränkt wird.

8. Katalysatormatte nach einem der Ansprüche 1 bis 7, dadurch gekennzeichnet, daß das Walzprodukt weniger als 10 sec. durch Tauchen in oder Besprühen mit einer wässrigen Polytetrafluoräthylen-Dispersion behandelt wird.

9. Katalysatormatte nach einem der Ansprüche 1 bis 8, dadurch gekennzeichnet, daß die Sintertemperatur zwischen 370 und 460 °C liegt und die Ofenatmosphäre vorzugsweise aus Stickstoff besteht.

**Claims**

1. Catalyst mat for the recombination of hydrogen and oxygen, in particular the gases formed during operation of electrical storage batteries, produced by impregnating a carrier material of polytetrafluoroethylene and kieselguhr with a catalytically active material, characterised in that a polytetrafluoroethylenekieselguhr mixture is rolled, the rolled product is impregnated with a palladium chloride solution and is then dipped in an aqueous polytetrafluoroethylene dispersion after intermediate drying, and that after renewed intermediate drying the mat is sintered in an inert or reducing furnace atmosphere.

2. Catalyst mat according to Claim 1, characterised in that the polytetrafluoroethylene : kieselguhr mixing ratio is between 40 : 60 % and 60 : 40 % by wt.

3. Catalyst mat according to Claims 1 and 2, characterised in that it contains 0.1 to 5 % by wt., preferably 0.5 to 2 % by wt. Pd.

4. Catalyst mat according to Claims 1 to 3, characterised in that it is rolled on a coal mat.

5. Catalyst mat according to Claim 4, characterised in that the coal mat is impregnated with copper oxide.

6. Catalyst mat according to one of Claims 1 to 5, characterised in that the mixture is applied under vibration to the roller in order to achieve a uniform distribution.

7. Catalyst mat according to one of Claims 1 to 6, characterised in that the rolled product is impregnated for at least 1 minute with a 0.1-5 % $PdCl_2$ solution.

8. Catalyst mat according to one of Claims 1 to 7, characterised in that the rolled product is treated for less than 10 secs. by immersion in or spraying with an aqueous polytetrafluoroethylene dispersion.

9. Catalyst mat according to one of Claims 1 to 8, characterised in that the sintering temperature is between 370° and 460 °C and the furnace atmosphere preferably consists of nitrogen.

**Revendications**

1. Natte de catalyse pour la recombinaison d'hydrogène et d'oxygène, notamment des gaz prenant naissance lors du fonctionnement des accumulateurs électriques, natte réalisée par imprégnation d'un matériau de support constitué de polytétrafluoréthylène et de terres d'infusoires avec un matériau catalytique actif, natte caractérisée en ce qu'un mélange de polytétrafluoréthylène et de terres d'infusoires est laminé, puis le produit de laminage est imprégné avec une solution de chlorure de palladium et après séchage intermédiaire est plongé dans une dispersion aqueuse de polytétrafluoréthylène, et ensuite, après un nouveau séchage intermédiaire, la natte est soumise à un frittage dans une atmosphère de four neutre ou réductrice.

2. Natte de catalyse selon la revendication 1, caractérisée en ce que le rapport de mélange du polytétrafluoréthylène et du kieselgur se situe entre 40 : 60 % en poids et 60 : 40 % en poids.

3. Natte de catalyse selon les revendications 1 et 2, caractérisée en ce que le catalyseur contient 0,1 à 5 % en poids, de préférence 0,5 à 2 % en poids de palladium.

4. Natte de catalyse selon les revendications 1 à 3, caractérisée en ce qu'elle est laminée sur une natte de carbone.

5. Natte de catalyse selon la revendication 4, caractérisée en ce que la natte de carbone est imprégnée d'oxyde de cuivre.

6. Natte de catalyse selon l'une des revendications 1 à 5, caractérisée en ce que le mélange, afin d'obtenir une répartition homogène, est amené au cylindre de laminage sous vibration.

7. Natte de catalyse selon l'une des revendications 1 à 6, caractérisée en ce que le produit laminé est imprégné pendant au moins une minute avec une solution contenant 0,1 à 5 % de chlorure de palladium.

8. Natte de catalyse selon l'une des revendications 1 à 7, caractérisée en ce que le produit laminé est traité moins de 10 secondes par immersion dans une dispersion aqueuse de polytétrafluoréthylène ou bien par aspersion avec cette dispersion.

9. Natte de catalyse selon l'une des revendications 1 à 8, caractérisée en ce que la température de frittage se situe entre 370 et 460 °C tandis que l'atmosphère du four est constituée de préférence d'azote.

Fig. 1